# EUROPEAN PATENT APPLICATION

(11) **EP 4 123 873 A1**
(43) Date of publication of application: **25.01.2023**
(21) Application number: 21187381.5
(22) Date of filing: 23.07.2021
(51) Int. Cl.: H02J 50/10, H02J 50/80, F21L 14/00, H02J 50/12, H05B 47/10

(54) **A POWER SUPPLY DEVICE FOR A WIRELESS SUPPLY OF ELECTRICAL POWER TO AN EMERGENCY LUMINAIRE AND EMERGENCY LUMINAIRE**

(71) Applicant: Tridonic GmbH & Co. KG, 6851 Dornbirn (AT)
(72) Inventor: Makwana, Deepak, 6850 Dornbirn (AT); Taylor, Michael, 6850 Dornbirn (AT)
(74) Representative: Beder, Jens

(57) **Abstract**

The present invention provides a power supply device (1) for a wireless supply of electrical power to an emergency luminaire (2). The power supply device (1) comprises electrical coupling means (12) for a wireless power transfer and an electrical energy storage (14). The power supply device (1) is configured for being detachably attached to the emergency luminaire (2). Further, the power supply device (1) is configured to wirelessly supply electrical power from the electrical energy storage (14) to the emergency luminaire (2), via a wireless transfer of the electrical power from the electrical coupling means (12) of the power supply device (1) to electrical coupling means (22) of the emergency luminaire (2), when the power supply device (1) is detachably attached to the emergency luminaire (2). In addition the invention proposes an emergency luminaire (2) and a system comprising such a power supply device (1) and such an emergency luminaire (2).

## Description

The present invention relates to a power supply device for a wireless supply of electrical power to an emergency luminaire, an emergency luminaire and an emergency lighting system.

In the prior art, emergency luminaires are well known. An emergency luminaire is configured to provide light emission to an area (e.g. of a building or an outdoor area), in which the emergency luminaire is arranged, in case of an emergency operation state. The emergency operation state corresponds to a state during which electrical energy supply from mains malfunctions or fails due to an emergency situation. Such an emergency situation may comprise or correspond to a fire in a building leading to interruption of electrical energy supply from mains in a part of the building or the whole building; mains failure etc. Mains may provide an AC voltage of 230 V with a frequency of 50 Hz or 60 Hz.

An emergency luminaire may comprise an emergency sign element displaying an emergency sign such that light emitted by a light source of the emergency luminaire lights the emergency sign. Such an emergency luminaire may be referred to as emergency sign luminaire.

In order to be able to provide light in the emergency operation state, an emergency luminaire needs to comprise an electrical energy storage that provides, instead of mains, the electrical power for the light emission. The terms "electrical power" and "electric power" may be used as synonyms and may be abbreviated by the term "power". The heat generated by the light source of the emergency luminaire may reduce the lifetime of the electrical energy storage. As a result, there may be a need of changing the electrical energy storage.

Furthermore, the electrical energy storage of the emergency luminaire may reduce the overall lifetime of the emergency luminaire in case the lifetime of the electrical energy storage is reduced due to environmental issues, such as very cold temperatures (e.g. as low as - 40°C) or hot temperatures that are not suitable for the electrical energy storage. This may the case when installing the emergency luminaire in an environment with harsh and hazardous conditions (e.g. distilleries, onshore gas and oil etc.) Emergency luminaires may for example be installed in an environment with a temperature between - 45°C and + 55°C. Therefore, in order to ensure reliability of an emergency luminaire, the electrical energy storage of the emergency luminaire needs to be replaceable so that the electrical energy storage may be replaced in case of a reduced lifetime or failure of the electrical energy storage. Sealing all the electrical components including the electrical energy storage of the emergency luminaire would not make it possible to replace the electrical energy storage. As a result, the electrical components of the emergency luminaire may not be easily sealed in a housing for protection against environmental influences, such as water, dust etc. This increases costs, effort and size of emergency luminaires for achieving a protection of the electrical components against environmental influences. In particular, costs, effort and size of providing an IP rated emergency luminaire are increased. In particular, it may not be possible to provide an emergency luminaire, wherein all electrical components are completely sealed. The abbreviation "IP" stands for "International Protection" respectively "Ingress Protection", which is a standard (IEC standard 60529) for protecting components against environmental influences, such as water, dust etc. That is, since there needs to be an access for servicing to the electrical energy storage of the emergency luminaire, providing IP protection may be difficult.

Therefore, it is an object of the present invention to provide means that allow overcoming the above described disadvantages. In particular, it may be an object to provide means allowing all electrical components of an emergency luminaire to be sealed. Further, it is in particular an object of the present invention to provide an emergency luminaire with electrical components that may be sealed, optionally according to the IP standard. Optionally, it may be an object of the present invention to provide means that allow an emergency luminaire to be installed in an environment that is unsuitable for an electrical energy storage (e.g. a battery) and, thus, has an negative effect on the lifetime of the electrical energy storage.

These and other objects, which become apparent upon reading the following description, are solved by the subject-matter of the independent claims. The dependent claims refer to preferred embodiments of the invention.

According to a first aspect of the invention, a power supply device for a wireless supply of electrical power to an emergency luminaire is provided. The power supply device comprises electrical coupling means for a wireless power transfer and an electrical energy storage. The power supply device is configured for being detachably attached to the emergency luminaire. The power supply device is configured to wirelessly supply electrical power from the electrical energy storage to the emergency luminaire, via a wireless transfer of the electrical power from the electrical coupling means of the power supply device to electrical coupling means of the emergency luminaire, when the power supply device is detachably attached to the emergency luminaire.

In other words, the power supply device is configured to wirelessly supply electrical power from the electrical energy storage via its electrical coupling means. Therefore, when the power supply device is detachably attached to the emergency luminaire, the power supply device may wirelessly supply electrical power to the emergency luminaire, via a wireless transfer of the electrical power from the electrical coupling means of the power supply device to electrical coupling means of the emergency luminaire.

Thus, the first aspect of the invention proposes to arrange the electrical energy storage for the emergency luminaire outside the emergency luminaire and provide a power supply device comprising the electrical energy storage. As a result, the heat generated by a light source of the emergency luminaire does not has a negative effect on the electrical energy storage when providing the electrical energy storage outside the emergency luminaire. In addition, the size of the emergency luminaire may be reduced since there is no space needed in the emergency luminaire for the electrical energy storage that may be bulky. By using a wireless transfer of electrical power from the electrical energy storage of the power supply device to the emergency luminaire for electrically supplying the emergency luminaire there is no need of wiring between the power supply device and the emergency luminaire. This reduces costs and effort for installing the emergency luminaire and the power supply device to provide an emergency lighting to an area. In addition, the electrical components of the emergency luminaire may be easily sealed in a housing without the need to provide openings for electrical supply wiring to the outside of the housing. As a result, there is no need of sealing such openings for the electrical supply wiring in order to keep the protection offered by the housing to the electrical components of the emergency luminaire that are sealed respectively enclosed by the housing. Therefore, the power supply device allows to easily provide an IP protection (i.e. protection against water, dust etc.) to the electrical components of the emergency luminaire by sealing the electrical components in a housing of the luminaire.

A further advantage is that emergency luminaires may be already mounted in a building, wherein the power supply device is detachably attached to each emergency luminaire only before the luminaire is used. A user (customer) at first may only purchase the emergency luminaires. Later, when he wants to use some or all of the emergency luminaires he may purchase for each of them a power supply device. As a result, there is not risk that the electrical energy storage provided by the power supply device to the respective emergency luminaire is discharged and has already reached the end of its lifetime before the respective emergency luminaire is actually used respectively needed. This may occur in ordinary emergency luminaires comprising the electrical energy storage that are mounted in a building without being used and, thus, without a recharging taking place of the electrical energy storage of the respective emergency luminaire.

Since the power transfer by the power supply device is wireless, attaching or detaching the power supply device to the emergency luminaire does not require forming (i.e. connecting) respectively resolving (i.e. disconnecting) electrical wire-bound connections between the power supply device and the emergency luminaire.

An emergency luminaire comprising an emergency sign element (e.g. an exit sign element or escape route sign element) that is lighted respectively illuminated by a light source of the emergency luminaire or displayed by the light source may be referred to as emergency sign luminaire (e.g. exit sign luminaire or escape route sign luminaire). The emergency sign element may comprise at least one emergency sign, e.g. at least one exit sign and/or at least one escape route sign. That is, the emergency luminaire may be an emergency sign luminaire. Such a light source may comprise or correspond to one or more light emitting diodes (LEDs). The one or more LEDs may correspond to one or more organic LEDs, one or more inorganic LEDs and/or one or more other LEDs known in the art. The light source, in particular the one or more LEDs, may be configured to emit colored light, optionally light of at least two colors. The light source may be referred to as electrical light source. The light emission of the light source may be controllable by the amount of electrical power supplied to the light source.

The term "safety sign" may be used as a synonym for the term "emergency sign". The terms "safety sign" and "emergency sign" may be understood as referring to a sign that provides information to a person for increasing the safety of the person in an emergency situation. For example, an exit sign indicates the nearest exit for a person, thus providing a safe exit of an area in an emergency situation. An escape route sign indicating an escape route provides safety to the person in that it allows the person to escape in an emergency situation.

The electrical coupling means of the power supply device and the electrical coupling means of the emergency luminaire may be configured to be magnetically coupled to each other for a wireless power transfer. In other words, these two electrical coupling means may form a magnetic coupling system, preferably a high frequency magnetic coupling system. In particular, the electrical coupling means of the power supply device may be configured to wirelessly transfer electrical power to the electrical coupling means of the emergency luminaire via electromagnetic induction. That is, the electrical coupling means of the power supply device and the electrical coupling means of the emergency luminaire may be configured to be coupled to each other by electromagnetic induction for electrical power transfer between them. In particular the electrical coupling means of the power supply device may be configured to wirelessly transfer a power transfer signal to the electrical coupling means of the emergency luminaire for wirelessly transferring electrical power to the electrical coupling means of the emergency luminaire. The power transfer signal may be a high frequency (power transfer) signal. The wireless power transfer between the electrical coupling means of the power supply device and the electrical coupling means of the emergency luminaire may be a high frequency power transfer.

The term "transmit" may be used as a synonym for the term "transfer" and, thus, the term "power transmission" may be used as a synonym for the term "power transfer".

Transferring electrical power corresponds to transferring electrical energy. Thus, the present invention may also be described with respect to electrical energy. That is, the description herein using electrical power is correspondingly valid when referring to electrical energy instead of electrical power.

The electrical energy storage may comprise or correspond to one or more batteries and/or one or more capacitors (e.g. super capacitors). At least one, optionally all, of the one or more batteries may be rechargeable. The power supply device may comprise a compartment in which the electrical energy storage is arranged, wherein the compartment is configured to control the temperature inside the compartment, in particular based on the environmental temperature. The compartment may be configured to heat and/or cool the inside of the compartment. The temperature of the compartment may be controlled by control means of the power supply device, optionally based on the environmental temperature. This allows to arrange the electrical energy storage in an environment with temperatures that are unsuitable (too high/warm or too low/cold) for the electrical energy storage and, thus, reduce the lifetime of the electrical energy storage or even cause failure of the storage. For example, in case of arranging the electrical energy storage in an environment with a temperature that is too low for the electrical energy storage, the compartment may heat the inside and, thus, ensure a suitable temperature for the temperature inside the compartment, inside which the electrical energy storage may be arranged. In other words, the compartment may be configured to keep the temperature of the electrical energy storage in a range that is suitable for the electrical energy storage and does not has an negative effect on the lifetime of the electrical energy storage.

The power supply device may comprises an electrical supply circuit for the emergency luminaire configured for supplying electrical power to the emergency luminaire from at least the electrical energy storage of the power supply device (via a wireless transfer of the electrical power from the electrical coupling means of the power supply device to electrical coupling means of the emergency luminaire). As a result, the emergency luminaire does not need to comprise an electrical supply circuit, in particular one or more converters (e.g. one or more AC/DC converters), which may be bulky. Therefore, the size of the emergency luminaire may be reduced. The electrical supply circuit may also be referred to as electrical power supply circuit.

The electrical energy storage may be a part of the electrical supply circuit or electrically connected thereto. The electrical coupling means of the power supply device may be a part of the electrical supply circuit or electrically connected thereto. In particular, the electrical supply circuit is configured for providing electrical power to a light source of the emergency luminaire from at least the electrical energy storage.

The electrical supply circuit may comprise or correspond to at least one converter configured for electrically supplying the emergency luminaire in order to enable light emission by the emergency luminaire. The at least one converter may be configured for power conversion. In particular, the at least one converter may be configured to convert a first voltage or current to a second voltage or current, wherein the second voltage respectively current is greater or smaller than the first voltage respectively current depending on the type of converter. Examples of converters comprise actively controlled converters that are controllable by control means, such as boost converters, buck converters, flyback converters, resonant converters or any other known converter types. The at least one converter may comprise or correspond to at least one AC/DC converter and/or at least one DC/DC converter. In addition or alternatively, the at least one converter may comprise or correspond to at least one DC/AC converter and/or at least one AC/AC converter. The electrical supply circuit optionally may comprise one or more filters (e.g. low pass filters, electromagnetic interference (EMI) filters etc.), one or more rectifier circuits (e.g. half-bridge rectifiers, full-bridge rectifier, etc.) and/or one or more power factor correction (PFC) circuits (e.g. active PFC circuits, passive PFC circuits etc.).

Optional, the power supply device may comprise a wireless power transfer means for wireless power transfer via the electrical coupling means of the power supply device. The wireless power transfer means may be part of the electrical supply circuit or may be electrically connected thereto. The wireless power transfer means may be controllable by control means for controlling wireless power transfer via the electrical coupling means of the power supply device. The wireless power transfer means may comprise or correspond to at least one DC/AC converter (e.g. a resonant DC/AC converter) and/or at least one resonant circuit (e.g. LC circuit respectively resonant tank) for generating a power transfer signal (wireless power signal) to be wirelessly transmitted via the electrical coupling means in order to achieve wireless power transfer. The electrical coupling means may be electrically connected to the wireless power transfer means. Optionally, the wireless power transfer means may be part of the electrical coupling means.

The power supply device may comprise attachment means for being detachably attached to the emergency luminaire, in particular a housing of the emergency luminaire. The attachment means of the power supply device may be configured to be detachably attached to corresponding attachment means of the emergency luminaire for detachably attaching the power supply device to the emergency luminaire. The attachment means of the power supply device may be configured for attaching the power supply means to the emergency luminaire by means of a click connection, snap-in connection, slide-in connection or any other connection known in the art. In other words, the power supply device may be configured for being detachably attached to the emergency luminaire by means of a click connection, snap-in connection, slide-in connection or any other connection known in the art. The attachment means of the power supply device may be configured to form a form-fit and/or force-fit connection with corresponding attachment means of the emergency luminaire for detachably attaching the power supply device to the emergency luminaire. That is, the power supply device may be configured to be detachably attached to the emergency luminaire by a form-fit and/or force fit connection.

Optionally, the power supply device is configured for being at least partly arranged in a cavity of the emergency luminaire. The power supply device may be configured to wirelessly supply electrical power from the electrical energy storage to the emergency luminaire, via a wireless transfer of the electrical power from the electrical coupling means of the power supply device to the electrical coupling means of the emergency luminaire, when the power supply device is at least partly arranged in the cavity of the emergency luminaire.

The cavity of the emergency luminaire may be a slot. The power supply device may be configured to be slotted into the emergency luminaire. The cavity of the emergency luminaire may comprise or correspond to an opening of the emergency luminaire to outside the emergency luminaire. In particular, the cavity of the emergency luminaire may comprise or correspond to an opening of a housing of the emergency luminaire to outside the housing. The shape of the power supply device, in particular a housing of the power supply device, may be fitted to the shape of the cavity. The power supply device may be configured to be detachably fixed in the cavity by a click connection, snap-in connection, slide-in connection or any other connection known in the art when the power supply device is at least partly arranged in the cavity. The power supply device may be configured to be detachably fixed in the cavity by a form-fit and/or force fit connection. In particular, the power supply device may be configured for being removably arranged in the cavity of the emergency luminaire.

The electrical energy storage may be rechargeable. The power supply device may comprise a charging circuit for charging the electrical energy storage. According to an embodiment, the charging circuit may be configured to charge the electrical energy storage using electrical power wirelessly received by the electrical coupling means of the power supply device. In particular, the charging circuit may be configured to charge the electrical energy storage using electrical power wirelessly received from the emergency luminaire, via a wireless transfer of the electrical power to the electrical coupling means of the power supply device from the electrical coupling means of the emergency luminaire, when the power supply device is detachably attached to the emergency luminaire. According to a further embodiment, the power supply device may be configured for being electrically connected to mains. The charging circuit may be configured to charge the electrical energy storage using electrical power from mains, when the power supply device is electrically connected to mains.

Optionally, the charging circuit is part of the electrical supply circuit of the power supply device.

Further, the power supply device may be configured to wirelessly supply electrical power from the electrical energy storage via its electrical coupling means to the electrical coupling means of the emergency luminaire in case of an emergency operation state, when the power supply device is detachably attached to the emergency luminaire.

As outlined already above, the emergency operation state corresponds to a state during which the electrical energy supply from mains malfunctions or fails, when the power supply device is connected to mains. This may be due to an emergency situation. For example in case of a fire in a building the electrical energy supply from mains may fail in a part of the building or the whole building, in which the power supply device may be installed for wirelessly supplying electric power to the emergency luminaire. Another example of an emergency situation is mains failure (e.g. due to bad weather or a power station stops to provide electrical energy). The normal operation state corresponds to a state during which mains electrical supplies the power supply device, i.e. during which there is no malfunction or failure of the electrical energy supply from mains. Thus, the power supply device and the emergency luminaire may either be in the normal operation state (i.e. electrical energy is supplied from mains) or in the emergency operation state (i.e. sufficient electrical energy for the operation of the emergency luminaire cannot be supplied from mains).

The electrical supply circuit may supply, via the electrical coupling means of the power supply device, electrical power to the electrical coupling means of the emergency luminaire from the electrical energy storage in case the emergency operation state is present.

The power supply device may comprise control means configured to wirelessly receive information from the emergency luminaire. The control means may be configured to receive, preferably wirelessly receive, information from any other external entity. The control means may be configured to control the power supply device to wirelessly supply electrical power from the electrical energy storage to the emergency luminaire in response to receiving information indicating the presence of the emergency operation state and/or instructing such a control. The aforementioned information may be wirelessly received by the power supply device.

For this, the power supply device may comprise a communication interface for wireless communication. The communication interface may be electrically connected to the control means or be part of the control means. The wireless communication may be a Bluetooth communication or any other known wireless communication type.

The control means may be configured to control the electrical supply circuit such that the electrical supply circuit supplies, via the electrical coupling means of the power supply device, electrical power to the electrical coupling means of the emergency luminaire from the electrical energy storage, in response to receiving information indicating the presence of the emergency operation state and/or instructing such a control.

The control means may comprise or correspond to a processor, microprocessor, controller, microcontroller, field programmable gate array (FPGA), application specific integrated circuit (ASIC) or any combination thereof.

Optionally, in case of the above embodiment, the control means is configured to control the charging circuit to charge the electrical energy storage using electrical power wirelessly received by the electrical coupling means of the power supply device in response to receiving information indicating the presence of the normal operation state and/or instructing such a control. In particular, the control means is configured to control the charging circuit to charge the electrical energy storage using electrical power wirelessly received from the emergency luminaire in response to receiving information indicating the presence of the normal operation state and/or instructing such a control. The aforementioned information may be wirelessly received by the power supply device.

Optionally, in case of the above further embodiment, the control means is configured to control the charging circuit to charge the electrical energy storage using electrical power from mains in response to receiving information indicating the presence of the normal operation state and/or instructing such a control.

The power supply device may be configured for being electrically connected to mains. The power supply device may be configured to wirelessly supply electrical power from mains via its electrical coupling means to the electrical coupling means of the emergency luminaire in case of a normal operation state, when the power supply device is detachably attached to the emergency luminaire and electrically connected to mains.

In particular, the electrical supply circuit is configured to receive electrical power from mains when the power supply device is connected to mains. The electrical supply circuit may be configured to supply, via the electrical coupling means of the power supply device, electrical power to the electrical coupling means of the emergency luminaire from mains in case the normal operation state is present.

When the power supply device is electrically connected to mains, the control means may be configured to determine, based on a state of mains, whether the normal operation state or the emergency operation is present. Further, the control means may be configured to control the power supply device to wirelessly supply electrical power from mains to the emergency luminaire in case the normal operation state is present. Furthermore, the control means may be configured to control the power supply device to wirelessly supply electrical power from the electrical energy storage to the emergency luminaire in case the emergency operation state is present.

The control means may be configured to control, based on information wirelessly received from extern, the wireless supply of electrical power from the power supply device to the emergency luminaire. Optionally, the control means may be configured to determine based on information received from extern whether the normal operation state or the emergency operations state is present.

In particular, the control means may be configured to determine whether the emergency operation state or the normal operation state is present by determining whether the electrical energy supply from mains to the power supply device functions or not (when the power supply device is electrically connected to mains). For example, the control means may determine that the electrical energy supply from mains functions in case the electrical energy, voltage and/or current supplied from mains are equal to or greater than a corresponding threshold value.

The control means may be configured to control the electrical supply circuit such that the electrical supply circuit supplies, via the electrical coupling means of the power supply device, electrical power to the electrical coupling means of the emergency luminaire from mains in case the normal operation state is present and from the electrical energy storage in case the emergency operation state is present.

When the power supply device is electrically connected to mains, the control means may be configured to control the charging circuit to charge the electrical energy storage using electrical power from mains in case the normal operation state is present.

Optionally, the power supply device is configured to wirelessly transmit information to the emergency luminaire by modulating a power transfer signal wirelessly transferred from the electrical coupling means of the power supply device to the electrical coupling means of the emergency luminaire when electrical power is wirelessly transferred between the electrical coupling means of the power supply device and the electrical coupling means of the emergency luminaire. In addition or alternatively, the power supply device may be configured to wirelessly receive information from the emergency luminaire by demodulating a power transfer signal wirelessly transferred to the electrical coupling means of the power supply device from the electrical coupling means of the emergency luminaire when electrical power is wirelessly transferred between the electrical coupling means of the power supply device and the electrical coupling means of the emergency luminaire.

In other words, the control means may be configured to wirelessly communicate with the emergency luminaire via the wireless transfer of electrical power between the electrical coupling means of the power supply device and the electrical coupling means of the emergency luminaire. The information may comprise or correspond to one or more instructions and/or one or more reference values, such as a value of an operation current to be supplied to the light source of the emergency lighting, a dimming level value of the light emission, any other light parameter, etc. That is, the information may comprise or correspond to information for adjusting parameters (e.g. desired current to be supplied to the light source of the emergency luminaire) and/or setting a dimming level.

In particular, the control means may be configured to wirelessly transmit information to the emergency luminaire by controlling the electrical supply circuit such that the information is modulated on the power transfer signal that is wirelessly transferred from the electrical coupling means of the power supply device to the electrical coupling means of the emergency luminaire when electrical power is wirelessly transferred between the electrical coupling means of the power supply device and the electrical coupling means of the emergency luminaire.

Optionally, the control means may be configured to control the light emission of the emergency luminaire such that in case the normal operation state is present, no light is emitted by the emergency luminaire. This may be achieved by controlling the power supply device to not wirelessly transfer electrical power to the electrical coupling means of the emergency luminaire. Further, the control means may be configured to control the light emission of the emergency luminaire such that in case the emergency operation is present, light is emitted by the emergency luminaire for providing an emergency lighting to the environment. In other words, the control means may control the light emission of the emergency luminaire such that the emergency luminaire only transmit light in the emergency operation state.

Alternatively or additionally, the control means may be configured to control the light emission of the emergency luminaire such that in case the normal operation state is present, light having a first light intensity is emitted by the emergency luminaire. This may be achieved by controlling the power supply device to wirelessly transfer a first amount of electrical power to the electrical coupling means of the emergency luminaire. Further, the control means may be configured to control the light emission of the emergency luminaire such that in case the emergency operation is present, light having a second light intensity is emitted by the emergency luminaire. This may be achieved by controlling the power supply device to wirelessly transfer a second amount of electrical power to the electrical coupling means of the emergency luminaire. The first light intensity may be greater than the second light intensity. Thus, the first amount of electrical power may be greater than the second amount of electrical power. The light of the first light intensity in particular may correspond to undimmed light that may be emitted by the light source of the emergency luminaire. The light of the second light intensity in particular may correspond to light that is dimmed more compared to the light of the first light intensity. Therefore, the emergency luminaire may be used both for normal lighting (in the normal operation state) and emergency lighting (in the emergency operation state). Reducing the amount of electrical power and, thus, dimming the light of the emergency luminaire in the emergency state, increases the time for which the electrical power device may wirelessly transfer electric power to the emergency luminaire from the electrical energy storage in the emergency operation state.

In case the emergency luminaire comprises control means for controlling the light emission of the emergency luminaire, the control means may be configured to wirelessly transmit, via the electrical coupling means of the power supply device, information to the control means of the emergency luminaire for controlling the light emission of the emergency luminaire. The information may comprise or correspond to one or more instructions and/or one or more reference values, such as a value of an operation current to be supplied to the light source of the emergency lighting, a dimming level value of the light emission, any other light parameter, etc. That is, the information may comprise or correspond to information for adjusting parameters (e.g. desired current to be supplied to the light source of the emergency luminaire) and/or setting a dimming level. The greater the dimming level of the light emitted by the light source of the emergency luminaire the greater the amount of light respectively the greater the light intensity emitted by the light source. The dimming level may be between zero percent (0%) and one hundred percent (100%), wherein in case of a dimming level of 0% no light is emitted by the light source and in case of a dimming level of 100% light having a maximum light intensity of the light source is emitted.

The electrical coupling means may comprise or corresponds to at least one conductor loop for a wireless power transfer. Optionally, the electrical coupling means may comprise or corresponds to at least one coil for a wireless power transfer. Optionally, the electrical coupling means may comprise or correspond to at least one antenna for wireless power transfer. In particular, the at least one conductor loop (optional at least one coil) may be configured to be magnetically coupled with the electrical coupling means of the emergency luminaire. In other words, the at least one conductor loop (optional at least one coil) is configured for a magnetic coupling, optional high frequency magnetic coupling. That is, the at least one conductor loop may be at least one magnetic coupling conductor loop respectively the at least one coil may be at least one magnetic coupling coil. The electrical coupling means of the power supply device may comprise or correspond to a magnetic coil system respectively arrangement. The at least one conductor loop (optional at least one coil) may be configured to be coupled to the electrical coupling means of the emergency luminaire by electromagnetic induction.

The emergency luminaire, to which the power supply device is configured to wirelessly supply electrical power, may be an emergency luminaire according to a second aspect of the invention, as described in the following.

In order to achieve the power supply device according to the first aspect of the invention, some or all of the above described optional features may be combined with each other.

According to a second aspect of the invention, an emergency luminaire is provided. The emergency luminaire comprises electrical coupling means for a wireless power transfer and a light source configured to be electrically supplied from the electrical coupling means. The emergency luminaire is configured for detachably attaching a power supply device to the emergency luminaire. The emergency luminaire is configured to be wirelessly supplied with electrical power from an electrical energy storage of the power supply device via a wireless transfer of the electrical power to the electrical coupling means from electrical coupling means of the power supply device, when the power supply device is detachably attached to the emergency luminaire.

The above description with regard to the power supply device according to the first aspect of the invention is correspondingly valid for the emergency luminaire according to the second aspect of the invention.

An emergency luminaire comprising an emergency sign element (e.g. an exit sign element or escape route sign element) that is lighted respectively illuminated by the light source of the emergency luminaire or displayed by the light source may be referred to as emergency sign luminaire (e.g. exit sign luminaire or escape route sign luminaire). The emergency sign element may comprise at least one emergency sign, e.g. at least one exit sign and/or at least one escape route sign. The emergency luminaire may be an emergency sign luminaire.

The light source may be referred to as electrical light source. The light emission of the light source may be controllable by the amount of electrical power supplied to the light source. The light source of the emergency luminaire may comprise or correspond to one or more light emitting diodes (LEDs). The one or more LEDs may correspond to one or more organic LEDs, one or more inorganic LEDs and/or one or more other LEDs known in the art. The light source, in particular the one or more LEDs, may be configured to emit colored light, optionally light of at least two colors.

The emergency luminaire may comprise at least one converter electrically connected to the electrical coupling means for receiving the electrical power from the electrical coupling means. The at least one converter is configured to set the electrical power, in particular the current, provided to the light source of the emergency luminaire. Optionally, the emergency luminaire may comprise a currents source, electrically connected to the electrical coupling means, for providing, based on the electrical power wirelessly received by the electrical coupling means, a current to the light source. The current source may correspond to the at least one converter.

The emergency luminaire may comprise attachment means for detachably attaching the power supply device to the emergency luminaire, in particular a housing of the emergency luminaire. The attachment means of the emergency luminaire may be configured to be detachably attached to corresponding attachment means of the power supply device for detachably attaching the power supply device to the emergency luminaire. The attachment means of the emergency luminaire may be configured for attaching the power supply means to the emergency luminaire by means of a click connection, snap-in connection, slide-in connection or any other connection known in the art. In other words, the emergency luminaire may be configured for detachably attaching the power supply device to the emergency luminaire by means of a click connection, snap-in connection, slide-in connection or any other connection known in the art. The attachment means of the emergency luminaire may be configured to form a form-fit and/or force-fit connection with corresponding attachment means of the power supply device for detachably attaching the power supply device to the emergency luminaire.

Optionally, the emergency luminaire comprises a cavity configured for receiving the power supply device. The emergency luminaire may be configured to be wirelessly supplied with electrical power from the electrical energy storage of the power supply device, via a wireless transfer of the electrical power to the electrical coupling means of the emergency luminaire from the electrical coupling means of the power supply device, when the power supply device is at least partly arranged in the cavity of the emergency luminaire.

The cavity of the emergency luminaire may be a slot. The cavity of the emergency luminaire may comprise or correspond to an opening of the emergency luminaire to outside the emergency luminaire. In particular, the cavity of the emergency luminaire may comprise or correspond to an opening of a housing of the emergency luminaire to outside the housing. The shape of the cavity may be fitted to the shape of the power supply device, in particular a housing of the power supply device. The cavity may be configured for detachably fixing the power supply device by a click connection, snap-in connection, slide-in connection or any other connection known in the art when the power supply device is at least partly arranged in the cavity. The cavity may be configured for detachably fixing the power supply device by a form-fit and/or force fit connection. In particular, the cavity may be configured for removably arranging the power supply device in the cavity.

The emergency luminaire may be configured for being electrically connected to mains. The emergency luminaire may be configured to wirelessly supply electrical power from mains to the power supply device, via a wireless transfer of the electrical power from the electrical coupling means of the emergency luminaire to the electrical coupling means of the power supply device, when the emergency luminaire is connected to mains and the power supply device is detachably attached to the emergency luminaire.

Optionally, the emergency luminaire may comprises an electrical supply circuit for supplying electrical power to the light source from mains, when the emergency luminaire is connected to mains. The electrical supply circuit ma be configured for supplying electrical power to the light source from the coupling means of the emergency luminaire. The electrical coupling means of the power supply device may be a part of the electrical supply circuit or electrically connected thereto.

The electrical supply circuit may comprise or correspond to at least one converter configured for electrically supplying the emergency luminaire in order to enable light emission by the emergency luminaire. The at least one converter may be configured for power conversion. In particular, the at least one converter may be configured to convert a first voltage or current to a second voltage or current, wherein the second voltage respectively current is greater or smaller than the first voltage respectively current depending on the type of converter. Examples of converters comprise actively controlled converters that are controllable by control means, such as boost converters, buck converters, flyback converters, resonant converters or any other known converter types. The at least one converter may comprise or correspond to at least on AC/DC converter and/or at least one DC/DC converter. In addition or alternatively, the at least one converter may comprise or correspond to at least one DC/AC converter and/or at least one AC/AC converter. The electrical supply circuit optionally may comprise one or more filters (e.g. low pass filters, electromagnetic interference (EMI) filters etc.), one or more rectifier circuits (e.g. half-bridge rectifiers, full-bridge rectifier, etc.) and/or one or more power factor correction (PFC) circuits (e.g. active PFC circuits, passive PFC circuits etc.).

Optional, the emergency luminaire may comprise a wireless power transfer means for wireless power transfer via the electrical coupling means of the emergency luminaire. The wireless power transfer means may be part of the electrical supply circuit or may be electrically connected thereto. The wireless power transfer means may be controllable by control means for controlling wireless power transfer via the electrical coupling means of the emergency luminaire. The wireless power transfer means may comprise or correspond to at least one DC/AC converter (e.g. a resonant DC/AC converter) and/or at least one resonant circuit (e.g. LC circuit respectively resonant tank) for generating a power transfer signal (wireless power signal) to be wirelessly transmitted via the electrical coupling means in order to achieve wireless power transfer. The electrical coupling means may be electrically connected to the wireless power transfer means. Optionally, the wireless power transfer means may be part of the electrical coupling means.

The emergency luminaire may be configured for being electrically connected to mains. The emergency luminaire may comprise control means. When the emergency luminaire is electrically connected to mains, the emergency luminaire may be configured to electrically supply the light source with electrical power from mains. The control means may be configured to determine, based on a state of mains, whether a normal operation state or an emergency operation state is present. Further, the control means may be configured to control the emergency luminaire to use electrical power from mains for electrically supplying the light source in case the normal operation state is present. The control means may be configured to control the emergency luminaire to use electrical power wirelessly received by the coupling means for electrically supplying the light source in case the emergency operation state is present.

The control means may comprise or correspond to a processor, microprocessor, controller, microcontroller, field programmable gate array (FPGA), application specific integrated circuit (ASIC) or any combination thereof.

The control means may be configured to control the optional energy supply circuit to use electrical power from mains for supplying the light source in case the normal operation state is present.

The control means may be configured to control the light emission of the emergency luminaire as outlined above with regard to the control means of the power supply device according to the first aspect of the invention. The above description of the control means of the power supply device according to the first aspect of the invention is correspondingly valid for the control means of the emergency luminaire according to the second aspect of the invention.

The emergency luminaire may comprise a communication interface for wireless communication. The communication interface may be electrically connected to the control means or be part of the control means. The wireless communication may be a Bluetooth communication or any other known wireless communication type.

The control means may be configured to wirelessly control the power supply device to wirelessly supply electrical power from the electrical energy storage to the emergency luminaire in case the emergency operation state is present. In addition or alternatively, the control means may be configured to wirelessly transmit to the power supply device information indicating a presence of the emergency operation state.

The control means may be configured to wirelessly control the power supply device to charge the electrical energy storage with electrical power in case the normal operation state is present. In addition or alternatively, the control means may be configured to wirelessly transmit to the power supply device information indicating a presence of the normal operation state.

The control means may be configured to wirelessly control the power supply device by wirelessly transmitting corresponding control information respectively instructions to the power supply device.

The control means may be configured to control the emergency luminaire to wirelessly supply electrical power from mains to the power supply device in case the normal operation state is present.

The control means may be configured to control the optional energy supply circuit to wirelessly supply electrical power from mains to the power supply device via the electrically coupling means of the emergency luminaire in case the normal operation state is present.

The emergency luminaire may be configured to wirelessly receive information from the power supply device by demodulating a power transfer signal wirelessly transferred to the electrical coupling means of the emergency luminaire from the electrical coupling means of the power supply device when electrical power is wirelessly transferred between the electrical coupling means of the emergency luminaire and the electrical coupling means of the power supply device. In addition or alternatively, the emergency luminaire may be configured to wirelessly transmit information to the power supply device by modulating a power transfer signal wirelessly transferred from the electrical coupling means of the emergency luminaire to the electrical coupling means of the power supply device when electrical power is wirelessly transferred between the electrical coupling means of the emergency luminaire and the electrical coupling means of the power supply device.

In particular, the control means may be configured to transmit information to the emergency luminaire by controlling the electrical supply circuit such that the information is modulated on the power transfer signal that is wirelessly transferred from the electrical coupling means of the emergency luminaire to the electrical coupling means of the power supply device when electrical power is wirelessly transferred between the electrical coupling means of the emergency luminaire and the electrical coupling means of the power supply device.

The electrical coupling means may comprise or corresponds to at least one conductor loop for a wireless power transfer. Optionally, the electrical coupling means may comprise or corresponds to at least one coil for a wireless power transfer. Optionally, the electrical coupling means may comprise or correspond to at least one antenna for wireless power transfer. In particular, the at least one conductor loop (optional at least one coil) may be configured to be magnetically coupled with the electrical coupling means of the power supply device. In other words, the at least one conductor loop (optional at least one coil) is configured for a magnetic coupling, optional high frequency magnetic coupling. That is, the at least one conductor loop may be at least one magnetic coupling conductor loop respectively the at least one coil may be at least one magnetic coupling coil. The electrical coupling means of the emergency luminaire may comprise or correspond to a magnetic coil system respectively arrangement. The at least one conductor loop (optional at least one coil) may be configured to be coupled to the electrical coupling means of the power supply device by electromagnetic induction.

The emergency luminaire according to the second aspect of the invention achieves the same advantages as the power supply device according to the first aspect of the invention.

The power supply device may be implemented according to the power supply device of the first aspect of the invention described above. In other words, the power supply device may correspond to the power supply device of the first aspect of the invention as described above.

In order to achieve the emergency luminaire according to the second aspect of the invention, some or all of the above described optional features may be combined with each other.

According to a third aspect of the invention, an emergency lighting system is provided. The emergency lighting system comprises a power supply device according to the first aspect of the invention, as described above. Further, the emergency lighting system comprises an emergency luminaire according to the second aspect of the invention, as described above. The power supply device is configured to wirelessly supply electrical power to the emergency luminaire via a wireless transfer of the electrical power from the electrical coupling means of the power supply device to the electrical coupling means of the emergency luminaire, when the power supply device is detachably attached to the emergency luminaire.

The emergency lighting system according to the third aspect of the invention achieves the same advantages as the power supply device according to the first aspect of the invention.

In the following, the invention is described exemplarily with reference to the enclosed figures, in which
- **Figure 1**: exemplarily shows a circuit diagram of a power supply device and an emergency luminaire according to an embodiment of the invention;
- **Figure 2**: is a schematic view of a power supply device and an emergency luminaire according to an embodiment of the invention;
- **Figure 3**: exemplarily shows a circuit diagram of a power supply device and an emergency luminaire according to an embodiment of the invention; and
- **Figure 4**: is a schematic view of a power supply device and an emergency luminaire according to an embodiment of the invention.

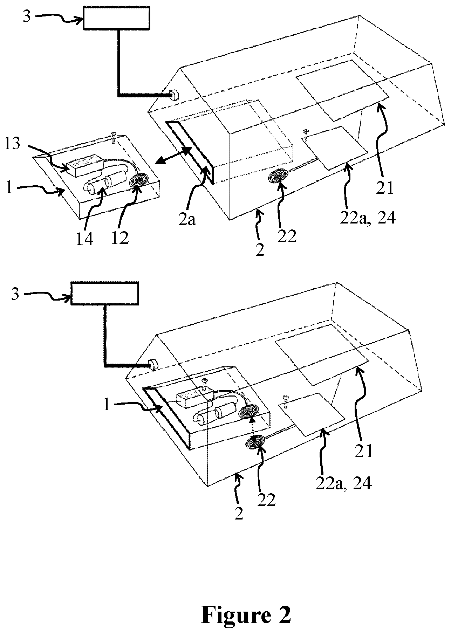

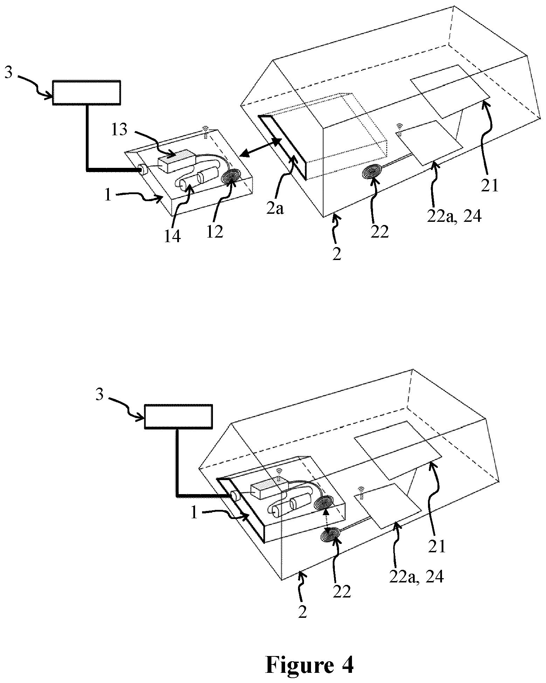

Figures 2 and 4 each show a first state, in which the power supply device is not attached to the emergency luminaire and a second state, in which the power supply device is detachably attached to the emergency luminaire.

In the figures, corresponding elements have the same reference signs. The proportions and dimensions of the elements shown in the figures do not represent the power supply device and the emergency luminaire to scale, but are merely chosen to describe the structure and function of the power supply device and emergency luminaire.

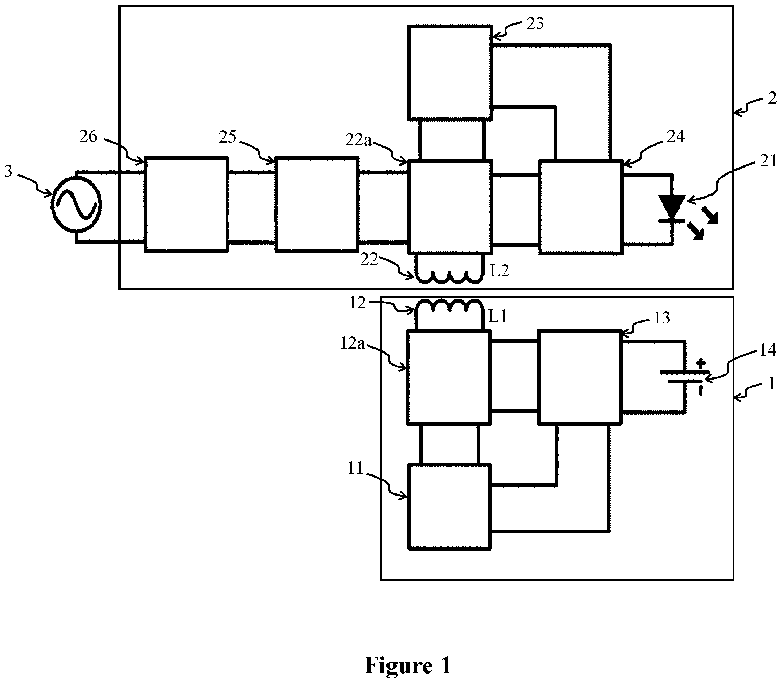

**Figure 1** exemplarily shows a circuit diagram of a power supply device and an emergency luminaire according to an embodiment of the invention.

The power supply device 1 is an example of the power supply device according to the first aspect of the invention. The emergency luminaire 2 is an example of the emergency luminaire according to the second aspect of the invention. The power supply device 1 and the emergency luminaire 2 form an emergency lighting system.

The emergency luminaire 2 comprises electrical coupling means 22 for a wireless power transfer and a light source 21 configured to be electrically supplied from the electrical coupling means 22. As shown in Figure 1, the electrical coupling means 22 may comprise or correspond to at least one coil L2. The electrical coupling means 22 are not limited thereto and may be differently implemented, as long as they are suited for a wireless power transfer. Other implementation forms are described above with respect to the emergency luminaire of the second aspect. The light source 21 may comprise or correspond to at least one light emitting diode (LED). The light source is not limited thereto and may be differently implemented.

As shown in Figure 1, the emergency luminaire 2 is configured to be electrically connected to mains 3 for being electrically supplied from mains 3. Further, the emergency luminaire 2 may comprise control means 23 configured to control light emission of the light source 21 by controlling electrical power supplied to the light source 21. In particular, the control means 23 may be configured to control supply of electrical power to the light source 21 from mains 3 and the electrical coupling means 22. The control means 23 may be configured to control the emergency luminaire 2 to use electrical power from mains 3 for electrically supplying the light source 21 in case the normal operation state is present. The control means 22 may be configured to control the emergency luminaire 2 to use electrical power from the electrical coupling means 22 for electrically supplying the light source 21 in case the emergency operation state is present.

Further, the emergency luminaire 2 may comprise an optional filter 26, such as an electromagnetic interference filter (EMI-filter), at least one optional AC/DC converter 25 (e.g. AC/DC flyback converter), optional wireless power transfer means 22a and a driver 24 for driving the light source 21. The filter 26 and the at least one AC/DC converter 25 are arranged such that they filter and convert electrical power from mains 3 for providing electrical power to the wireless power transfer means 22a and the driver 24. The filter 26, the at least one converter 25, the wireless power transfer means 22a and the driver 24 may form or be part of an electrical supply circuit (of the emergency luminaire 2) for electrically supplying the light source 21. The control means 23 may be configured to control the electrical supply circuit of the emergency luminaire 2 for controlling the light emission of the light source 21. The control means 23 may be configured to control wireless power transfer via the electrical coupling means 22 of the emergency luminaire 2 by controlling the electrical supply circuit.

In particular, the control means 23 may be configured to control light emission of the light source 21 by controlling the driver 24. The driver 24 is arranged such that it obtains electrical power provided by mains 3 (via the optional filter 26 and the at least one optional AC/DC converter 25) and electrical power wirelessly received by the electrical coupling means 22. The optional driver 24 may comprise or correspond to at least one converter, in particular at least one AC/DC converter and/or at least one DC/DC converter. In addition or alternatively, the optional driver 24 may comprise or correspond to at least one current source.

In particular, the control means 23 may be configured to control the wireless power transfer means 22a for controlling wireless power transfer via the electrical coupling means 22. The wireless power transfer means 22a may comprise or correspond to at least one DC/AC converter (e.g. a resonant DC/AC converter) and/or at least one resonant circuit (e.g. LC circuit respectively resonant tank) for generating a power transfer signal (wireless power signal) to be wirelessly transmitted via the electrical coupling means 22 in order to achieve wireless power transfer. As shown in Figure 1, the electrical coupling means 22 may be electrically connected to the wireless power transfer means 22a. Optionally, the wireless power transfer means 22a may be part of the electrical coupling means 22 (not shown in Figure 1). The wireless power transfer means 22a is only optional. According to an embodiment, the function of the wireless power transfer means 22a may be provided by another circuit of the emergency luminaire 2, in particular of the electrical supply circuit.

As shown in Figure 1, the optional filter 26 may be electrically connected between mains 3 and the input of the at least one optional AC/DC converter 25 (when the emergency luminaire 2 is electrically connected to mains 3). The optional wireless power transfer means 22a may be electrically connected between the output of the at least one optional AC/DC converter 25 and the input of the optional driver 24. The light source 21 maybe electrically connected to the output of the driver 24.

The power supply device 1 comprises electrical coupling means 12 for a wireless power transfer and an electrical energy storage 14. As shown in Figure 1, the electrical coupling means 12 may comprise or correspond to at least one coil Li. The electrical coupling means 12 are not limited thereto and may be differently implemented, as long as they are suited for a wireless power transfer. Other implementation forms are described above with respect to the power supply device of the first aspect of the invention. The power supply device 1 is configured for being detachably attached to the emergency luminaire 2. The power supply device 1 is configured to wirelessly supply electrical power from the electrical energy storage 14 via its electrical coupling means 12. Thus, the power supply device 1 is configured to wirelessly supply electrical power from the electrical energy storage 14 to the emergency luminaire 2, via a wireless transfer of the electrical power from the electrical coupling means 12 of the power supply device 1 to the electrical coupling means 22 of the emergency luminaire 2, when the power supply device 1 is detachably attached to the emergency luminaire 2.

The power supply device 1 may comprise an optional charging circuit 13 for charging the electrical energy storage 14. In this case, the electrical energy storage 14 is rechargeable. The charging circuit 13 is configured to charge the electrical energy storage 14 using electrical power wirelessly received by the electrical coupling means 12 of the power supply device 1. Thus, the chagrining circuit 13 is configured to charge the electrical energy storage 14 using electrical power wirelessly received from the emergency luminaire 2, via a wireless transfer of the electrical power to the electrical coupling means 12 of the power supply device 1 from the electrical coupling means 22 of the emergency luminaire 2, when the power supply device 1 is detachably attached to the emergency luminaire 2. The charging circuit 13 may comprise or correspond to at least one converter, such as at least one AC/DC converter and/or at least one DC/DC converter. The charging circuit 13 is not limited thereto and, thus, may be implemented in any known way. As shown in Figure 1, the charging circuit 13 may be electrically connected between the optional wireless power transfer means 12a and the electrical energy storage 14.

The power supply device 1 is configured to wirelessly supply electrical power from the electrical energy storage 14 via its electrical coupling means 12 to the electrical coupling means 22 of the emergency luminaire 2 in case of an emergency operation state, when the power supply device 1 is detachably attached to the emergency luminaire 2.

The power supply device 1 may comprise an optional wireless power transfer means 12a for wireless power transfer via the electrical coupling means 12 of the power supply device 1. The wireless power transfer means 12a may comprise or correspond to at least one DC/AC converter (e.g. a resonant DC/AC converter) and/or at least one resonant circuit (e.g. LC circuit respectively resonant tank) for generating a power transfer signal (wireless power signal) to be wirelessly transmitted via the electrical coupling means 12 in order to achieve wireless power transfer. As shown in Figure 1, the electrical coupling means 12 may be electrically connected to the wireless power transfer means 12a. Optionally, the wireless power transfer means 12a may be part of the electrical coupling means 12 (not shown in Figure 1). The wireless power transfer means 12a are only optional. According to an embodiment, the function of the wireless power transfer means 12a may be provided by another circuit of the power supply device 1.

The power supply device 1 may further comprise control means 11 for controlling the function of the power supply device 1. The control means 11 may be configured to control the power supply device 1 to wirelessly supply electrical power from the electrical energy storage 14 via the electrical coupling means 12 in case the emergency operation state is present. The control means 11 may be configured to control the charging circuit 13 to charge the electrical energy storage with electrical power wirelessly received by the electrical coupling means 12 of the power supply device 1 in case the normal operation state is present.

The control means 11 may be configured to wirelessly communicate with the emergency luminaire 2, in particular the control means 23. For this, the power supply device 1 may comprise a communication interface configured for wireless communication (not shown in Figure 1), wherein the communication interface may be part of the control means 11 or may be electrically connected with the control means 11. Accordingly, the emergency luminaire 2, in particular the control means 23, may be configured to wirelessly communicate with the power supply device 1, in particular the control means 11. For this the emergency luminaire 2 may comprise a communication interface configured for wireless communication (not shown in Figure 1), wherein the communication interface may be part of the control means 23 or may be electrically connected with the control means 23. The wireless communication may be a Bluetooth communication or any other known wireless communication type. Optionally, the control means 11 of the power supply device may be configured to wirelessly communicate with any other entity that is configured for wireless communication. Optionally, the control means 23 of the emergency luminaire 2 may be configured to wirelessly communicate with any other entity that is configured for wireless communication.

In addition or alternatively, the power supply device 1, in particular the control means 11, may be configured to wirelessly communicate with the emergency luminaire 2 via the wireless power transfer between the electrical coupling means 12 of the power supply device 1 and the electrical coupling means 22 of the emergency luminaire 2, when the power supply device 1 is detachably attached to emergency luminaire 2. For this, the power supply device 1 may be configured to wirelessly transmit information to the emergency luminaire 2 by modulating a power transfer signal wirelessly transferred from the electrical coupling means 12 of the power supply device 1 to the electrical coupling means 22 of the emergency luminaire 2 when electrical power is wirelessly transferred between the electrical coupling means 12 of the power supply device 1 and the electrical coupling means 22 of the emergency luminaire 2. The control means 11 may be configured to control the power supply device 1, in particular the wireless power transfer means 12a, to modulate the power transfer signal wirelessly transferred from the electrical coupling means 12 of the power supply device 1 to the electrical coupling means 22 of the emergency luminaire 2, in order to wirelessly transmit information to the emergency luminaire 2. Thus, the power supply device 1 may be configured to wirelessly transmit information to another entity by modulating a power transfer signal wirelessly transferred from the electrical coupling means 12 of the power supply device 1 to corresponding electrical coupling means of the other entity.

The power supply device 1 may be configured to wirelessly receive information from the emergency luminaire 2 by demodulating a power transfer signal wirelessly transferred to the electrical coupling means 12 of the power supply device 1 from the electrical coupling means 22 of the emergency luminaire 2 when electrical power is wirelessly transferred between the electrical coupling means 12 of the power supply device 1 and the electrical coupling means 22 of the emergency luminaire 2. The control means 11 may be configured to control the power supply device 1, in particular the wireless power transfer means 12a, to demodulate the power transfer signal wirelessly transferred to the electrical coupling means 12 of the power supply device 1 from the electrical coupling means 22 of the emergency luminaire 2, in order to wirelessly receive information from the emergency luminaire 2. Thus, the power supply device 1 may be configured to wirelessly receive information from another entity by demodulating a power transfer signal wirelessly received by the electrical coupling means 12 of the power supply device 1 from corresponding electrical coupling means of the other entity.

The emergency luminaire 2, in particular the control means 23, may be configured to wirelessly communicate with the power supply device 1 via the wireless power transfer between the electrical coupling means 22 of the emergency luminaire 2 and the electrical coupling means 12 of the power supply device 1. For this, the emergency luminaire 2 may be configured to wirelessly transmit information to the power supply device 1 by modulating a power transfer signal wirelessly transferred from the electrical coupling means 22 of the emergency luminaire 2 to the electrical coupling means 12 of the power supply device 1 when electrical power is wirelessly transferred between the electrical coupling means 22 of the emergency luminaire 2 and the electrical coupling means 12 of the power supply device 1. The control means 23 may be configured to control the emergency luminaire 2, in particular the wireless power transfer means 22a, to modulate the power transfer signal wirelessly transferred from the electrical coupling means 22 of the emergency luminaire 2 to the electrical coupling means 12 of the power supply device 1, in order to wirelessly transmit information to the power supply device 1. Thus, the emergency luminaire 2 may be configured to wirelessly transmit information to another entity by modulating a power transfer signal wirelessly transferred from the electrical coupling means 22 of the emergency luminaire 2 to corresponding electrical coupling means of the other entity.

The emergency luminaire 2 may be configured to wirelessly receive information from the power supply device 1 by demodulating a power transfer signal wirelessly transferred to the electrical coupling means 22 of the emergency luminaire 2 from the electrical coupling means 12 of the power supply device 1 when electrical power is wirelessly transferred between the electrical coupling means 22 of the emergency luminaire 2 and the electrical coupling means 12 of the power supply device 1. The control means 23 may be configured to control the emergency luminaire 2, in particular the wireless power transfer means 22a, to demodulate the power transfer signal wirelessly transferred to the electrical coupling means 22 of the emergency luminaire 2 from the electrical coupling means 12 of the power supply device 1, in order to wirelessly receive information from the power supply device 1. Thus, the emergency luminaire 2 may be configured to wirelessly receive information from another entity by demodulating a power transfer signal wirelessly transferred to the electrical coupling means 22 of the emergency luminaire 2 from corresponding electrical coupling means of the other entity.

When the emergency luminaire 2 is electrically connected to mains 3, the emergency luminaire 2, in particular the electrical supply circuit of the emergency luminaire 2, is configured to electrically supply the light source 21 with electrical power from mains 3. The control means 23 of the emergency luminaire 2 may be configured to determine whether the emergency operation state or the normal operation state is present by determining whether the electrical energy supply from mains 3 to the emergency luminaire 2 functions or not. In case it functions the normal operation state is present and in case it does not function (i.e. it fails or malfunctions) the emergency operation state is present. The control means 23 of the emergency luminaire 2 may be configured to control the emergency luminaire 2, in particular the electrical supply circuit, to use electrical power from mains 3 for electrically supplying the light source 21 in case the normal operation state is present. The control means 23 of the emergency luminaire 2 may be configured to control the emergency luminaire 2, in particular the electrical supply circuit, to use electrical power wirelessly received by the electrical coupling means 22 for electrically supplying the light source 21 in case the emergency operation state is present.

The control means 23 of the emergency luminaire 2 may be configured to control the emergency luminaire 2 to wirelessly supply electrical power from mains 3 via the electrical coupling means 22 in case the normal operation state is present. Thus, the control means 23 may be configured to control the emergency luminaire 2 to wirelessly supply electrical power from mains 3 via the electrical coupling means 22 to the electrical coupling means 12 of the power supply device 1 in case of the normal operation state, when the power supply device 1 is detachably attached to the emergency luminaire 2.

The control means 23 of the emergency luminaire 2 may be configured to wirelessly control the power supply device 1 to charge the electrical energy storage 14 with electrical power in case the normal operation state is present (when the power supply device 1 is detachably attached to the emergency luminaire 2). For this the control means 23 may be configured to wirelessly transmit corresponding control information respectively instructions to the power supply device 1, in particular to the control means 11 of the power supply device 1. In addition or alternatively, the control means 23 of the emergency luminaire 2 may be configured to wirelessly transmit to the power supply device 1, in particular to the control means 11 of the power supply device 1, information indicating a presence of the normal operation state.

Further, the control means 23 of the emergency luminaire 2 may be configured to wirelessly control the power supply device 1 to wirelessly supply electrical power from the electrical energy storage 14 to the emergency luminaire 2 in case the emergency operation state is present (when the power supply device 1 is detachably attached to the emergency luminaire 2). For this the control means 23 may be configured to wirelessly transmit corresponding control information respectively instructions to the power supply device 1, in particular to the control means 11 of the power supply device 1. In addition or alternatively, the control means 23 of the emergency luminaire 2 may be configured to wirelessly transmit to the power supply device 1, in particular to the control means 11 of the power supply device 1, information indicating a presence of the emergency operation state.

The control means 11 of the power supply device 1 may be configured to control the power supply device 1 to wirelessly supply electrical power from the electrical energy storage 14 via the electrical coupling means 12 in response to receiving information indicating the presence of the emergency operation state and/or receiving information instructing such a control. Information instructing such a control may comprise or correspond to control information respectively instructions instructing the power supply device 1 to wirelessly supply electrical power from the electrical energy storage 14 via the electrical coupling means 12. Thus, in response to receiving the aforementioned information, the control means 11 of the power supply device 1 may be configured to control the power supply device 1 to wirelessly supply electrical power from the electrical energy storage 14 via the electrical coupling means 12 to the electrical coupling means 22 of the emergency luminaire 2 (when the power supply device 1 is detachably attached to the emergency luminaire 2).

The control means 11 of the power supply device 1 may be configured to control the charging circuit 13 to charge the electrical energy storage 14 using electrical power wirelessly received by the electrical coupling means 12 in response to receiving information indicating the presence of the normal operation state and/or receiving information instructing such a control. Information instructing such a control may comprise or correspond to control information respectively instructions instructing the power supply device 1 to charge the electrical energy storage 14.

In addition or alternatively, the control means 11 of the power supply device 1 may be configured to determine respectively detect a wireless transfer of electrical power to the electrical coupling means 12 of the power supply device 1. In case of determining respectively detecting such a wireless power transfer the control means 11 of the power supply device 1 may be configured to control the charging circuit 13 to charge the electrical energy storage 14 using the electrical power wirelessly received by the electrical coupling means 12. Thus, the charging circuit 13 may use, for charging the electrical energy storage 14, electrical power received by the electrical coupling means 12 from the electrical coupling means 22 of the emergency luminaire 2 (when the power supply device 1 is detachably attached to the emergency luminaire).

Therefore, the emergency luminaire 2 may use in the normal operation state electrical power supplied by mains 3 for supplying the light source 21. When the power supply device 1 is detachably attached to the emergency luminaire 2, the emergency luminaire 2 may use in the emergency operation state electrical power wirelessly transferred to the electrical coupling means 22 from the electrical coupling means 12 of the power supply device 1. For this, the power supply device 1 may transfer electrical power from the electrical energy storage 14 via the electrical coupling means 12 to the electrical coupling means 22 of the emergency luminaire 2. To cause such an electrical power supply in the emergency operation state the control means 23 of the emergency luminaire 2 may wirelessly control the power supply device to do so (by wirelessly communicating corresponding control information to the power supply device 1). In addition or alternatively, the control means 23 of the emergency luminaire 2 may wirelessly communicate to the power supply device 1 information indicating the presence of the emergency operation state. In response thereto, the control means 11 of the power supply device 1 may control the power supply device 1 to wirelessly supply electrical power from the electrical energy storage 14 via the electrical coupling means 12 to the electrical coupling means 22 of the emergency luminaire 2.

In the normal operation state, the emergency luminaire 2 may supply electrical energy from mains 3 via its electrical coupling means 22 to the coupling means 12 of the power supply device for charging the electrical energy storage 14 (when the power supply device 1 is detachably attached to the emergency luminaire 2). The charging circuit 13 may charge the electrical energy storage 14 using electrical power received by the electrical coupling means 12 of the power supply device 1. The control means 23 of the emergency luminaire 2 may wirelessly control the charging circuit 13 to do so, in case the normal operation state is present. In addition or alternatively, the control means 23 may wirelessly communicate to the power supply device 1 information indicating the presence of the normal operation mode. In response thereto, the control means 11 of the power supply device 1 may control the charging circuit 13 to charge the electrical energy storage 14 using electrical power wirelessly received by the electrical coupling means 12. In addition or alternatively, the control means 11 of the power supply device 1 may detect a wireless power transfer to the electrical coupling means 12 of the power supply device 1. In case the control means 11 detects such a wireless power transfer, the control means 11 may control the charging circuit 13 to charge the electrical energy storage 14 using electrical power wirelessly received by the electrical coupling means 12.

For further information on the features and function of the power supply device 1 and the emergency luminaire 2 of Figure 1, in particular the wireless transfer of electrical power between the power supply device 1 and the emergency luminaire 2, reference is made to the above description of the power supply device according to the first aspect of the invention and the above description of the emergency luminaire according to the second aspect of the invention.

**Figure 2** is a schematic view of a power supply device and an emergency luminaire according to an embodiment of the invention. The emergency luminaire 2 and power supply device 1 of Figure 2 correspond to the emergency luminaire 2 and power supply device 1 of Figure 1 and, thus, the above description of Figure 1 is correspondingly valid for the emergency luminaire 2 and power supply device 1 of Figure 2. In the following mainly additional features with respect to Figure 1 are described.

As shown in Figure 2, the emergency luminaire 2 may comprise a cavity 2a for receiving the power supply device 1 and, thus, detachably attaching the power supply device 1 to the emergency luminaire 2. The cavity 2a maybe a slot. The power supply device 1 is configured for being at least partly arranged in the cavity 2a of the emergency luminaire 2. The power supply device 1 may be detachably attached to the emergency luminaire 2 by at least partly arranging the power supply device 1 in the cavity 2a of the emergency luminaire 2. The power supply device 1 is configured to wirelessly supply electrical power from the electrical energy storage 14 to the emergency luminaire 2, via a wireless transfer of the electrical power from the electrical coupling means 12 of the power supply device 1 to the electrical coupling means 22 of the emergency luminaire 2, when the power supply device 1 is at least partly arranged in the cavity 2a of the emergency luminaire 2.

The top of Figure 2 shows a first state, in which the power supply device 1 is not arranged in the cavity 2a of the emergency luminaire 2 and, thus, is not attached to the emergency luminaire 2. As indicated by the double arrow between the power supply device 1 and the cavity 2a of the emergency luminaire 2, the power supply device 1 may be removably arranged in the cavity 2a. The bottom of Figure 2 shows a second state, in which the power supply device 1 is arranged in the cavity 2a of the emergency luminaire 2 and, thus, is detachably attached to the emergency luminaire 2. In this second state, a wireless power transfer between the electrical coupling means 12 of the power supply device 1 and the electrical coupling means 22 of the emergency luminaire 2 is possible (as indicated by the dashed double arrow).

In Figure 2, for the emergency luminaire 2 merely the electrical coupling means 22, the optional wireless power transfer means 22a, the optional driver 24 and the light source 21 are indicated. For the power supply device 1, merely the electrical coupling means 12, the charging circuit 13 and the electrical energy storage 14 are indicated.

For further information on the features and function of the power supply device 1 and the emergency luminaire 2 of Figure 2 reference is made to the above description of the power supply device according to the first aspect of the invention, the above description of the emergency luminaire according to the second aspect of the invention as well as the above description of Figure 1.

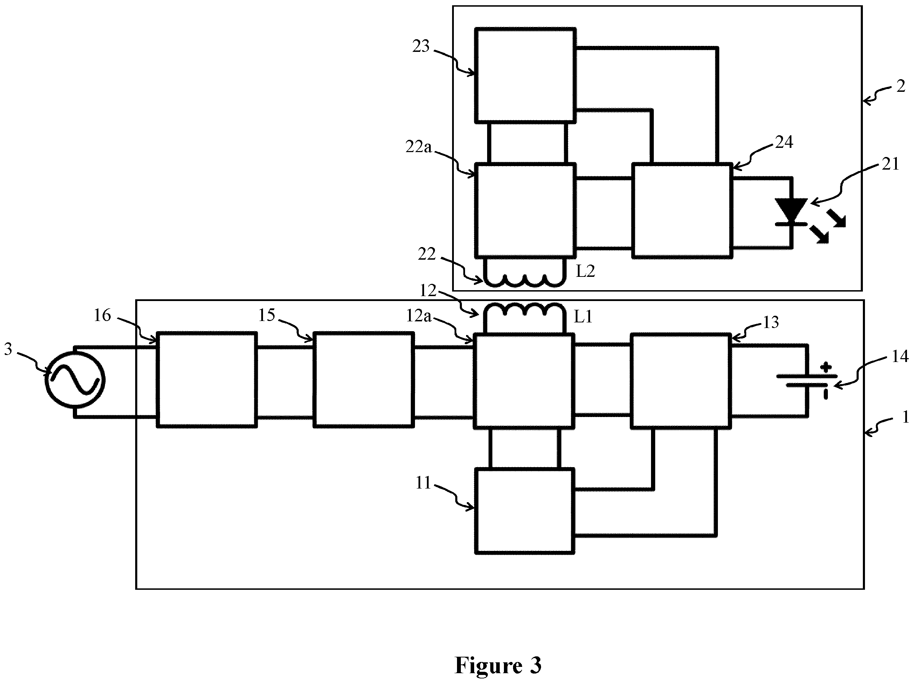

**Figure 3** exemplarily shows a circuit diagram of a power supply device and an emergency luminaire according to an embodiment of the invention. The emergency luminaire 2 and power supply device 1 of Figure 3 differs to the emergency luminaire 2 and power supply device 1 of Figure 1 in that according to Figure 3 the power supply device (not the emergency luminaire) is configured to be electrically connected to mains. The above description of Figure 1 is correspondingly valid for the emergency luminaire 2 and power supply device 1 of Figure 3 and in the following mainly the differences with respect to Figure 1 are described.

As shown in Figure 3, the emergency luminaire 2 is not configured to be electrically connected to mains 3. Therefore, the emergency luminaire 2 of Figure 3 does not comprise the filter 26 and the at least one converter 25 that are comprised by the emergency luminaire 2 of Figure 1. The control means 23 of the emergency luminaire 2 may be configured to control light emission of the light source 21 by controlling electrical power supplied to the light source 21 from the electrical coupling means 22. In particular, the control means 23 may be configured to control light emission of the light source 21 by controlling the optional driver 24. The driver 24 is arranged such that it obtains electrical power wirelessly received by the electrical coupling means 22.

The control means 23 of the emergency luminaire may be configured to wirelessly receive information, such as control information respectively instructions, from the control means 13 of the power supply device 1. Such control information respectively instructions may indicate respectively instruct a certain amount of electrical power, in particular current, to be supplied by the driver 24 to the light source and/or a dimming level for the light source. The dimming level may be between 0% and 100%, wherein at a dimming level of 0% the light source 21 does not emit light and at a dimming level of 100% the light source 21 emits light with a maximum light intensity. Thus, for dimming levels greater than 0%, the greater the dimming level the greater the light intensity of the light emitted by the light source 21 and vice versa.

According to an embodiment, the emergency luminaire 2 may not comprise the control means 23 and the driver 24. In this case, the light source 21 is electrically connected via the optional wireless power transfer means 22a to the electrical coupling means 22. The wireless power transfer means 22a may comprises or corresponds to at least one AC/DC converter for converting the electrical power wirelessly received by the electrical coupling means 22 to a DC power. The power transfer means 22a may function as a current source for providing, based on the electrical power wirelessly received by the electrical coupling means 22, a current to the light source 21. The wireless power transfer means 22 may be arranged such that the greater the electrical power wirelessly received by the electrical coupling means 22 the greater the power (e.g. DC power) respectively current provided to the light source 21 and vice versa. Thus, in this case the light emission of the emergency luminaire 2 may be controlled by the amount of electrical power wirelessly transferred from the electrical coupling means 12 of the power supply device 1 to the electrical coupling means 22 of the emergency luminaire 2 (when the power supply device 1 is detachably attached to the emergency luminaire 2). The controller 11 of the power supply device 1 may control the light emission of the emergency luminaire 2 by controlling the amount of electrical power that is wirelessly transferred from the electrical coupling means 12 of the power supply device 1 to the electrical coupling means 22 of the emergency luminaire 2 (when the power supply device 1 is detachably attached to the emergency luminaire 2).

The power supply device 1 is configured to be electrically connected to mains 3. The power supply device 1 may comprise an optional filter 16 and at least one optional AC/DC converter 15 (e.g. AC/DC flyback converter). The above description with regard to the optional filter 26 and at least one optional AC/DC converter 25 of the emergency luminaire 2 of Figure 1 is correspondingly valid for the optional filter 16 and the at least one optional AC/DC converter 15 of the power supply device 1 of Figure 3. The filter 16 and the at least one AC/DC converter 15 are arranged such that they filter and convert electrical power from mains 3 for providing electrical power to the wireless power transfer means 12a of the power supply device 1 and the charging circuit 13, when the power supply device 1 is connected to mains 3. The wireless power transfer means 12a is arranged such that it may obtain electrical power provided by mains 3 (via the optional filter 16 and the at least one optional AC/DC converter 15) and the electrical energy storage 14.

As shown in Figure 3, the optional filter 16 may be electrically connected between mains **3** and the input of the at least one optional AC/DC converter 15 (when the power supply device 1 is electrically connected to mains 3). The optional wireless power transfer means 12a may be electrically connected between the output of the at least one optional AC/DC converter 25 and the charging circuit 13. The optional wireless power transfer means 12a may be electrically connected to the electrical energy storage 14, optional via the charging circuit 13.

The charging circuit 13 is configured to charge the electrical energy storage 14 using electrical power from mains 3, when the power supply device 1 is electrically connected to mains 3. The power supply device 1 is configured to wirelessly supply electrical power from mains 3 via its electrical coupling means 12 to the electrical coupling means 22 of the emergency luminaire 2 in case of a normal operation state, when the power supply device 1 is detachably attached to the emergency luminaire 2 and electrically connected to mains 3. The power supply device 1 is configured to wirelessly supply electrical power from the electrical energy storage 14 via its electrical coupling means 12 to the electrical coupling means 22 of the emergency luminaire 2 in case of an emergency operation state, when the power supply device 1 is detachably attached to the emergency luminaire 2.

When the power supply device 1 is electrically connected to mains 3, the control means 11 may be configured to determine whether the emergency operation state or the normal operation state is present by determining whether the electrical energy supply from mains 3 to the power supply device 1 functions or not. In case it functions the normal operation state is present and in case it does not function (i.e. it fails or malfunctions) the emergency operation state is present. The control means 11 of the power supply device 1 may be configured to control the power supply device 1 to wirelessly supply electrical power from mains 3 via the electrical coupling means 12 to the electrical coupling means 22 of the emergency luminaire 2 in case the normal operation state is present (when the power supply device 1 is detachably attached to the emergency luminaire 2). The control means 11 may be configured to control the power supply device 1 to wirelessly supply electrical power from the electrical energy storage 14 via the electrical coupling means 12 to the electrical coupling means 22 of the emergency luminaire 2 in case the emergency operation state is present (when the power supply device 1 is detachably attached to the emergency luminaire 2).

When the power supply device 1 is electrically connected to mains 3, the control means 11 may be configured to control the charging circuit 13 to charge the electrical energy storage 14 using electrical power from mains 3 in case the normal operation state is present.

Therefore, the emergency luminaire 2 and power supply device 1 of Figure 3 differs from the emergency luminaire 2 and power supply device 1 of Figure 1 in that according to the embodiment of Figure 1 the emergency luminaire 2 is configured to be electrically connected to mains 3 and, thus, the power supply device 1 of Figure 1 is merely used to wirelessly transfer electrical power from its electrical energy storage 14 to the emergency luminaire 2 in case of the emergency operation state. In contrast thereto, according to the embodiment of Figure 3, the power supply device 1 is configured to be electrically connected to mains 3. Thus, the power supply device 1 of Figure 3 is used for supplying the emergency luminaire 2 with electrical power (via the aforementioned wireless power transfer) both in the normal operation state and the emergency operation state. In case of the normal operation state, the power supply device 1 of Figure 3 may wirelessly transfer electrical power from mains 3 via its electrical coupling means 12 to the electrical coupling means 22 of the emergency luminaire 2 (when the power supply device 1 is detachably attached to the emergency luminaire 2). In case of the emergency operation state, the power supply device of Figure 3 may wirelessly transfer electrical power from its electrical energy storage 14 via its electrical coupling means 12 to the electrical coupling means 22 of the emergency luminaire 2 (when the power supply device 1 is detachably attached to the emergency luminaire 2). The embodiment of Figure 3 has the advantages that the emergency luminaire 2 may be implemented in a smaller size and with less costs compared to the embodiment of Figure 1, because the emergency luminaire 2 of Figure 3 does not need to comprise circuitry for supplying electrical power from mains 3 to the light source 21. In addition, the components of the emergency luminaire 2 of Figure 3 may be easier sealed in a housing compared to the emergency luminaire 2 of Figure 1, because the emergency luminaire 2 of Figure 3 does not comprise electrical connecting means for electrically connecting the emergency luminaire to mains 3, which would to have to be sealed in order to not reduce a sealing by a housing of the emergency luminaire 2.

For further information on the features and function of the power supply device 1 and the emergency luminaire 2 of Figure 3 reference is made to the above description of the power supply device according to the first aspect of the invention, the above description of the emergency luminaire according to the second aspect of the invention as well as the above description of Figure 1.

**Figure 4** is a schematic view of a power supply device and an emergency luminaire according to an embodiment of the invention. The emergency luminaire 2 and power supply device 1 of Figure 4 correspond to the emergency luminaire 2 and power supply device 1 of Figure 3 and, thus, the above description of Figure 3 is correspondingly valid for the emergency luminaire 2 and power supply device 1 of Figure 4. In the following mainly additional features with respect to Figure 3 are described.

As shown in Figure 4, the emergency luminaire 2 may comprise a cavity 2a for receiving the power supply device 1 and, thus, detachably attaching the power supply device 1 to the emergency luminaire 2. The cavity 2a may be a slot. The power supply device 1 is configured for being at least partly arranged in the cavity 2a of the emergency luminaire 2. The power supply device 1 may be detachably attached to the emergency luminaire 2 by at least partly arranging the power supply device 1 in the cavity 2a of the emergency luminaire 2. The power supply device 1 is configured to wirelessly supply electrical power from the electrical energy storage 14 and from mains 3 to the emergency luminaire 2, via a wireless transfer of the electrical power from the electrical coupling means 12 of the power supply device 1 to the electrical coupling means 22 of the emergency luminaire 2, when the power supply device 1 is at least partly arranged in the cavity 2a of the emergency luminaire 2 and electrically connected to mains 3.

The top of Figure 2 shows a first state, in which the power supply device 1 is not arranged in the cavity 2a of the emergency luminaire 2 and, thus, is not attached to the emergency luminaire 2. As indicated by the double arrow between the power supply device 1 and the cavity 2a of the emergency luminaire, the power supply device 1 may be removably arranged in the cavity 2a. The bottom of Figure 2 shows a second state, in which the power supply device 1 is arranged in the cavity 2a of the emergency luminaire 2 and, thus, is detachably attached to the emergency luminaire 2. In this second state, a wireless power transfer between the electrical coupling means 12 of the power supply device 1 and the electrical coupling means 22 of the emergency luminaire 2 is possible (as indicated by the dashed double arrow). Therefore, in the second state the power supply device 1 may wirelessly supply electrical power from the electrical energy storage 14 and mains 3 to the emergency luminaire 2 by the aforementioned wireless power transfer.

In Figure 4, for the emergency luminaire 2 merely the electrical coupling means 22, the optional wireless power transfer means 22a, the optional driver 24 and the light source 21 are indicated.

For the power supply device 1, merely the electrical coupling means 12, the charging circuit 13 and the electrical energy storage 14 are indicated.

For further information on the features and function of the power supply device 1 and the emergency luminaire 2 of Figure 4 reference is made to the above description of the power supply device according to the first aspect of the invention, the above description of the emergency luminaire according to the second aspect of the invention as well as the above description of Figure 3.

The systems of Figures 1 to 4 have the advantage that in case the electrical energy storage (for providing electrical power in the emergency operation state to the emergency luminaire) of the power supply device malfunctions or fails, the electrical energy storage may be easily replaced by detaching the power supply device and detachably attaching a power supply device with a functional electrical energy storage. In the case of Figures 2 and 4, the replacement of the electrical energy storage by replacing the power supply device may be easily performed by removing the power supply device with the malfunctioning electrical energy storage from the cavity of the emergency luminaire and arranging a power supply device with a functioning electrical energy storage in the cavity of the emergency luminaire. For the aforementioned replacements, no changes need to be made to the structure and function of the emergency luminaire. In particular, there does not need to be a reconfiguration respectively change of wiring, because the power transfer between the power supply device and the emergency luminaire is wireless. Therefore, a replacement of the power supply device may be done within a few seconds, which reduces maintenance times. Further, a sealing of an IP protection of the emergency luminaire would not be effected by such a replacement.

For the embodiments of Figures 1 and 2, the replacement of the power supply device may be performed in the normal operation state without an effect on a lighting by the emergency luminaire (that may occur in the normal operation state), because the emergency luminaire may be electrically connected to mains. That is, for the embodiments of Figures 1 and 2, the electrical connection of the emergency luminaire to mains is independent to an attachment of the power supply device to the emergency luminaire.

All steps which are performed by the various entities described in the present disclosure as well as the functionalities described to be performed by the various entities are intended to mean that the respective entity is adapted to or configured to perform the respective steps and functionalities. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A power supply device (1) for a wireless supply of electrical power to an emergency luminaire (2); wherein
- the power supply device (1) comprises electrical coupling means (12) for a wireless power transfer and an electrical energy storage (14);
- the power supply device (1) is configured for being detachably attached to the emergency luminaire (2); and
- the power supply device (1) is configured to wirelessly supply electrical power from the electrical energy storage (14) to the emergency luminaire (2), via a wireless transfer of the electrical power from the electrical coupling means (12) of the power supply device (1) to electrical coupling means (22) of the emergency luminaire (2), when the power supply device (1) is detachably attached to the emergency luminaire (2).

2. The power supply device (1) according to claim 1, wherein
- the power supply device (1) is configured for being at least partly arranged in a cavity (2a) of the emergency luminaire (2); and
- the power supply device (1) is configured to wirelessly supply electrical power from the electrical energy storage (14) to the emergency luminaire (2), via a wireless transfer of the electrical power from the electrical coupling means (12) of the power supply device (1) to the electrical coupling means (22) of the emergency luminaire (2), when the power supply device (1) is at least partly arranged in the cavity (2a) of the emergency luminaire (2).

3. The power supply device (1) according to claim 1 or 2, wherein
- the electrical energy storage (14) is rechargeable;
- the power supply device (1) comprises a charging circuit (13) for charging the electrical energy storage (1); and
- the charging circuit (13) is configured to charge the electrical energy storage (14) using electrical power wirelessly received by the electrical coupling means (12) of the power supply device (1).

4. The power supply device (1) according to claim 1 or 2, wherein
- the electrical energy storage (14) is rechargeable;
- the power supply device (1) comprises a charging circuit (13) for charging the electrical energy storage (14);
- the power supply device (1) is configured for being electrically connected to mains (3); and
- the charging circuit (13) is configured to charge the electrical energy storage (14) using electrical power from mains (3), when the power supply device (1) is electrically connected to mains (3).

5. The power supply device (1) according to any one of the previous claims, wherein
- the power supply device (1) is configured to wirelessly supply electrical power from the electrical energy storage (14) via its electrical coupling means (12) to the electrical coupling means (22) of the emergency luminaire (2) in case of an emergency operation state, when the power supply device (1) is detachably attached to the emergency luminaire (2).

6. The power supply device (1) according to claim 5, wherein the power supply device (1) comprises control means (11) configured to
- wirelessly receive information from the emergency luminaire (2); and
- control the power supply device (1) to wirelessly supply electrical power from the electrical energy storage (14) to the emergency luminaire (2) in response to receiving information indicating the presence of the emergency operation state and/or instructing such a control.

7. The power supply device (1) according to claim 6, when depending on claim 3, wherein the control means (11) is configured to control the charging circuit (13) to charge the electrical energy storage (14) using electrical power wirelessly received by the electrical coupling means (12) of the power supply device (1) in response to receiving information indicating the presence of the normal operation state and/or instructing such a control.

8. The power supply device (1) according to claim 5, wherein
- the power supply device (1) is configured for being electrically connected to mains (3); and
- the power supply device (1) is configured to wirelessly supply electrical power from mains (3) via its electrical coupling means (12) to the electrical coupling means (22) of the emergency luminaire (2) in case of a normal operation state, when the power supply device (1) is detachably attached to the emergency luminaire (2) and electrically connected to mains (3).

9. The power supply device (1) according to claim 8, the power supply device (1) comprising control means (11), wherein
- when the power supply device (1) is electrically connected to mains (3), the control means (11) is configured to
- determine, based on a state of mains (3), whether the normal operation state or the emergency operation is present,
- control the power supply device (1) to wirelessly supply electrical power from mains (3) to the emergency luminaire (2) in case the normal operation state is present, and
- control the power supply device (1) to wirelessly supply electrical power from the electrical energy storage (14) to the emergency luminaire (2) in case the emergency operation state is present.

10. The power supply device (1) according to claim 9, when depending on claim 4, wherein, when the power supply device (1) is electrically connected to mains (3), the control means (11) is configured to control the charging circuit (13) to charge the electrical energy storage (14) using electrical power from mains (3) in case the normal operation state is present.

11. The power supply device (1) according to any one of the previous claims, wherein
- the power supply device (1) is configured to wirelessly transmit information to the emergency luminaire (2) by modulating a power transfer signal wirelessly transferred from the electrical coupling means (12) of the power supply device (1) to the electrical coupling means (22) of the emergency luminaire (2) when electrical power is wirelessly transferred between the electrical coupling means (12) of the power supply device (1) and the electrical coupling means (22) of the emergency luminaire (2); and/or
- the power supply device (1) is configured to wirelessly receive information from the emergency luminaire (2) by demodulating a power transfer signal wirelessly transferred to the electrical coupling means (12) of the power supply device (1) from the electrical coupling means (22) of the emergency luminaire (2) when electrical power is wirelessly transferred between the electrical coupling means (12) of the power supply device (1) and the electrical coupling means (22) of the emergency luminaire (2).

12. An emergency luminaire (2) comprising
- electrical coupling means (22) for a wireless power transfer and a light source (21) configured to be electrically supplied from the electrical coupling means (22); wherein
- the emergency luminaire (2) is configured for detachably attaching a power supply device (1) to the emergency luminaire (2); and
- the emergency luminaire (2) is configured to be wirelessly supplied with electrical power from an electrical energy storage (14) of the power supply device (1) via a wireless transfer of the electrical power to the electrical coupling means (22) from electrical coupling means (12) of the power supply device (1), when the power supply device (1) is detachably attached to the emergency luminaire (2).

13. The emergency luminaire (2) according to claim 12, wherein
- the emergency luminaire (2) comprises a cavity (2a) configured for receiving the power supply device (1); and
- the emergency luminaire (2) is configured to be wirelessly supplied with electrical power from the electrical energy storage (14) of the power supply device (1), via a wireless transfer of the electrical power to the electrical coupling means (22) of the emergency luminaire (2) from the electrical coupling means (12) of the power supply device (1), when the power supply device (1) is at least partly arranged in the cavity (2a) of the emergency luminaire (2).

14. The emergency luminaire (2) according to claim 12 or 13, wherein
- the emergency luminaire (2) is configured for being electrically connected to mains (3), and
- the emergency luminaire (2) is configured to wirelessly supply electrical power from mains (3) to the power supply device (1), via a wireless transfer of the electrical power from the electrical coupling means (22) of the emergency luminaire (2) to the electrical coupling means (12) of the power supply device (1), when the emergency luminaire (2) is connected to mains (3) and the power supply device (1) is detachably attached to the emergency luminaire (2).

15. The emergency luminaire (2) according to any one of claim 12 to 14, wherein
- the emergency luminaire (2) is configured for being electrically connected to mains (3), and
- the emergency luminaire (2) comprises control means (23); wherein
- when the emergency luminaire (2) is electrically connected to mains (3),
- the emergency luminaire (2) is configured to electrically supply the light source (21) with electrical power from mains (3),
- the control means (23) is configured to determine, based on a state of mains (3), whether a normal operation state or an emergency operation state is present, and
- the control means (23) is configured to control the emergency luminaire (2) to use electrical power from mains (3) for electrically supplying the light source (21) in case the normal operation state is present.

16. The emergency luminaire (2) according to claim 15, wherein the control means (23) is configured to
- wirelessly control the power supply device (1) to wirelessly supply electrical power from the electrical energy storage (14) to the emergency luminaire (2) in case the emergency operation state is present, and/or
- wirelessly transmit to the power supply device (1) information indicating a presence of the emergency operation state.

17. The emergency luminaire (2) according to claim 15 or 16, wherein the control means (23) is configured to
- wirelessly control the power supply device (1) to charge the electrical energy storage (14) with electrical power in case the normal operation state is present, and/or
- wirelessly transmit to the power supply device (1) information indicating a presence of the normal operation state.

18. The emergency luminaire (2) according to any one of claims 15 to 17, wherein the control means (23) is configured to control the emergency luminaire (2) to wirelessly supply electrical power from mains (3) to the power supply device (1) in case the normal operation state is present.

19. The emergency luminaire (2) according to any one of the previous claims, wherein
- the emergency luminaire (2) is configured to wirelessly receive information from the power supply device (19) by demodulating a power transfer signal wirelessly transferred to the electrical coupling means (22) of the emergency luminaire (2) from the electrical coupling means (12) of the power supply device (1) when electrical power is wirelessly transferred between the electrical coupling means (22) of the emergency luminaire (2) and the electrical coupling means (12) of the power supply device (1); and/or
- the emergency luminaire (2) is configured to wirelessly transmit information to the power supply device (1) by modulating a power transfer signal wirelessly transferred from the electrical coupling means (22) of the emergency luminaire (2) to the electrical coupling means (12) of the power supply device (1) when electrical power is wirelessly transferred between the electrical coupling means (22) of the emergency luminaire (2) and the electrical coupling means (12) of the power supply device (1).

20. The power supply device (1) according to any one of claims 1 to 11 or the emergency luminaire (2) according to any one of claims 12 to 19, wherein
- the electrical coupling means (12; 22) comprises or corresponds to at least one conductor loop, optionally at least one coil, for a wireless power transfer.

21. An emergency lighting system comprising
- a power supply device (1) according to any one of claims 1 to 11 and 20, and
- an emergency luminaire (2) according to any one of claims 12 to 20; wherein
- the power supply device (1) is configured to wirelessly supply electrical power to the emergency luminaire (2) via a wireless transfer of the electrical power from the electrical coupling means (12) of the power supply device (1) to the electrical coupling means (22) of the emergency luminaire (2), when the power supply device (1) is detachably attached to the emergency luminaire (2).
